# EUROPEAN PATENT APPLICATION

(11) **EP 4 663 338 A1**
(43) Date of publication of application: **17.12.2025**
(21) Application number: 25153354.3
(22) Date of filing: 22.01.2025
(51) Int. Cl.: B23K 37/04, B23H 11/00

(54) **FIXTURE FOR POSITIONING VANES IN AN EDM MACHINE**

(30) Priority: 14.06.2024 US 202418743196
(71) Applicant: Chromalloy Gas Turbine LLC, Palm Beach Gardens, Florida 33410 (US)
(72) Inventor: VIRELAS, Jorge, Phoenix (US)
(74) Representative: Elzaburu S.L.P.

(57) **Abstract**

An electrical discharge machining (EDM) fixture for machining a part includes a support structure fixable onto a work surface, a base plate fixed to the support structure, a toggle clamp positioned on one side of the base plate, and a secondary clamp positioned on an opposite side of the base plate. A plurality of contact points are respectively associated with the toggle clamp and the secondary clamp, and a tool ball is fixed to the base plate.

## Description

### CROSS-REFERENCES TO RELATED APPLICATIONS

(NOT APPLICABLE)

### STATEMENT REGARDING FEDERALLY SPONSORED RESEARCH OR DEVELOPMENT

(NOT APPLICABLE)

### BACKGROUND

The invention relates to a fixture for securing a part to be machined and, more particularly, relates to an electrical discharge machining (EDM) fixture that supports a turbine or compressor vane for slot repair.

EDM is a machining process that removes material from a workpiece using thermal energy generated by electrical discharges (sparks). The process utilizes an electrode typically made of graphite or copper. When a voltage is applied between the electrode and the workpiece, electrical discharges occur, eroding material from the workpiece to form the desired shape. EDM is suitable for machining the superalloys and hard materials of which turbine and compressor vanes are typically manufactured.

Engine run parts wear differently by part, which makes it more difficult to automate a repeatable repair process. In vane slot repair, the process may include changing a slot length, which is difficult with existing processes due to the need for accuracy and precision. Additionally, existing repair processes require the part to be held in a vertical orientation, often due to limited workspace, which thus requires the part to be reset for leading and trailing edge repair.

### SUMMARY

The EDM fixture of the described embodiments addresses the challenges with the existing process. An objective is to provide a fixture that can make the process repeatable and reproduceable. The fixture of the described embodiments includes components that secure the part to be machined in a consistent and repeatable position. The fixture is configured to support the part horizontally rather than vertically so that both the leading edge slot(s) and the trailing edge slot(s) can be accessed without requiring the part to be reset. The fixture enables the EDM process to be automated, thereby eliminating difficulties and inconsistencies that occur with the current manual processes.

Additionally, the electrode holder may be provided with locating structure that identifies a location of the slot(s) to be processed. In some embodiments, the locating structure is a shim that can fit into the seal slot and serves to identify a center of the seal slot for subsequent EDM processing. Computer software associated with the electrode holder can confirm that the fixture itself is properly secured in the workspace and the part is mounted correctly in the fixture. The software can identify the location of the slots to be processed and ultimately controls the EDM operation.

One aspect of the disclosure includes an electrical discharge machining (EDM) fixture for machining a part with a support structure fixable onto a work surface, a base plate fixed to the support structure, a toggle clamp positioned on one side of the base plate, and a secondary clamp positioned on an opposite side of the base plate. A plurality of contact points are respectively associated with the toggle clamp and the secondary clamp, and a tool ball is fixed to the base plate.

A further aspect of the disclosure includes the preceding aspects and wherein the fixture may include two secondary clamps spaced from each other and three contact points respectively associated with the toggle clamp and the two secondary clamps. A further aspect of the disclosure includes the preceding aspects and wherein the fixture may include a clocking tab selectively engageable with the part to set an angle of rotation of the part. In some embodiments, in a further aspect of the disclosure, the clocking tab may be secured to the base plate between the two secondary clamps.

A further aspect of the disclosure includes the preceding aspects and wherein the support structure may include a riser fixable onto the work surface and a subplate fixed to the riser, where the base plate is fixed to the subplate. In a further aspect of the disclosure, the subplate may be provided with apertures for connectors that secure the subplate to the riser and for connectors that secure the base plate to the subplate.

A further aspect of the disclosure includes the preceding aspects and wherein the tool ball may be positioned at a center of the base plate.

A further aspect of the disclosure includes the preceding aspects and wherein the base plate, the toggle clamp, the secondary clamp, and the tool ball may define a workstation, and the fixture may include two workstations fixed to the support structure.

A further aspect of the disclosure includes the preceding aspects and wherein the base plate, the toggle clamp, and the secondary clamp may be positioned to support the part in a horizontal orientation.

A further aspect of the disclosure includes the preceding aspects and wherein the fixture may also include a set block station secured on the support structure that is configured for setting electrode offset/location for an electrode holder.

A further aspect of the disclosure includes an electrical discharge machining (EDM) assembly for machining a part with the EDM fixture of the described embodiments and an electrode holder cooperable with the EDM fixture. The electrode holder may include a plurality of electrodes, and a shim selectively engageable with the part to locate the electrode holder for use.

A further aspect of the disclosure includes the preceding aspects and wherein the electrode holder may further include a leading face side and a trailing face side, where the electrodes may be secured to the leading face side and the trailing face side. A further aspect of the disclosure includes the preceding aspects and wherein the electrode holder may include a first shim on the leading face side and a second shim on the trailing face side. A further aspect of the disclosure includes the preceding aspects and wherein the electrode holder includes a first guide block to which the first shim may be secured and a second guide block to which the second shim may be secured.

A further aspect of the disclosure includes the preceding aspects and wherein the leading face side may be set at a first angle, and the trailing face side may be set at a second angle, different from the first angle, where the first and second angles are supplementary angles.

A further aspect of the disclosure includes the preceding aspects and wherein the electrode holder may include a tool ball on an underside thereof.

### BRIEF DESCRIPTION OF THE DRAWINGS

These and other aspects and advantages will be described in detail with reference to the accompanying drawings, in which:
FIG. 1 is a perspective view of the EDM fixture including two workstations;
FIG. 2 is a perspective view of the EDM fixture securing a part on each workstation for EDM processing;
FIG. 3 is a trailing edge view of the fixture with the parts in place for machining;
FIG. 4 is a leading edge view of the fixture with the parts in place for machining; and
FIGS. 5 and 6 show the electrode holder that is cooperable with the EDM fixture.

### DETAILED DESCRIPTION

The EDM fixture will be described in the context of an application for repairing or re-shaping seal slots in a turbine or compressor vane. The application is exemplary, and it will be appreciated that the fixture can be configured to accommodate any part intended for EDM processing.

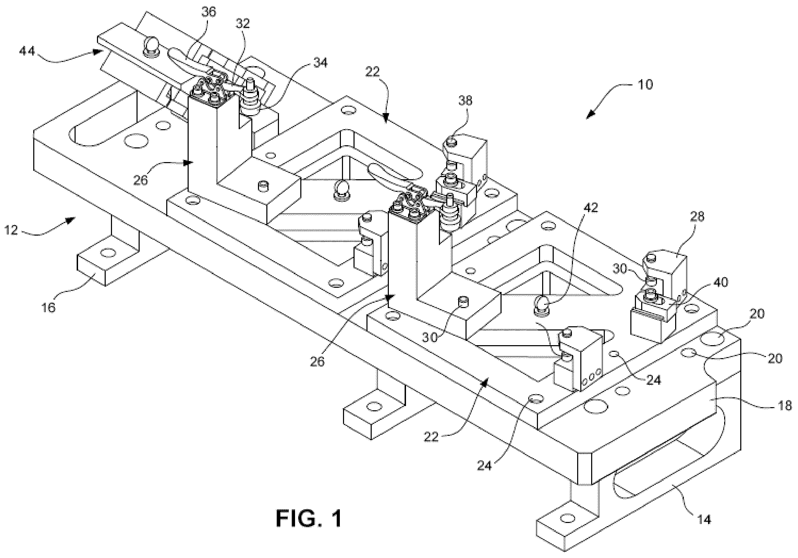

With reference to FIG. 1, the EDM fixture 10 may include a support structure 12 fixable onto a work surface. In some embodiments, the support structure 12 may include a riser 14 fixable onto the work surface via connecting tabs 16 and a subplate 18 fixed to the riser 14. The riser 14 may serve to increase the height of the overall base fixture. The connecting tabs 16 may include apertures for receiving connectors used to secure the riser 14 to the work surface. The subplate 18 may include a plurality of apertures 20 for connectors that secure the subplate 18 to the riser 14 and for connectors that secure other components of the EDM fixture 10 to the subplate 18.

At least one base plate 22 may be fixed to the subplate 18. The base plate 22 may include apertures 24 for receiving connectors to secure the base plate 22 to the subplate 18 and to secure components of the fixture to the base plate 22. In some embodiments, the EDM fixture 10 may include two base plates 22 as shown, defining two workstations. Still additional workstations may be included. That is, the EDM fixture 10 in some embodiments may incorporate structure for supporting multiple parts (e.g., two or more parts) for EDM processing.

A toggle clamp 26 may be positioned on one side of the base plate 22, and at least one secondary clamp 28 may be positioned on an opposite side of the base plate 22. In some embodiments, each base plate 22, i.e., each workstation, may include two secondary clamps 28. The toggle clamp 26 and the one or more secondary clamps 28 may secure the part for EDM processing. Two secondary clamps 28 are shown in FIG. 1. The toggle clamp 26 and secondary clamps 28 may include contact points 30 for part positioning. With two secondary clamps 28, the clamps 28 may be spaced from each other, and each workstation may incorporate at least three contact points 30 respectively associated with the toggle clamp 26 and the two secondary clamps 28. As such, the EDM fixture 10 may include a total of six contact points. In some embodiments, the contact points 30 may be carbide pins, which material minimizes wear and in turn impacts the part location relative to the fixture. Other hardened tool steel materials could be used for contact points.

The toggle clamp 26 may include a clamp arm 32 supporting an engagement member 34 at a distal end. An actuating handle 36 may displace the clamp arm 32 to engage the engagement member 34 with the inner shroud rail 37 of the part. The secondary clamps 28 may include set screws 38 that press down on and secure the outer shroud flange 39 of the part in place.

A clocking tab 40 may be fixed on the base plate 22 and may serve to set a rotation angle of the part. The clocking tab 40 may include a socket screw that locks the clocking tab 40 in place once the rotation angle of the part is set. In some embodiments, the clocking tab 40 may be secured to the base plate 22 between the two secondary clamps 28.

A tool ball 42 may define a point of reference for the electrode holder. In some embodiments, the tool ball 42 may be positioned at a center of the base plate 22. In use, the electrode holder may be controlled via internal software that uses the tool ball 42 to identify the position of the base plate 22 and each workstation.

The EDM fixture 10 may also include a set block station 44 that may be configured for setting electrode depth for the EDM holder. Over time, EDM electrodes can wear and may require redress to refresh functionality. In the past, redress was performed off-site. With the set block station in-situ on the fixture, electrode redress may be readily performed. The block station 44 holds two blocks of graphite material, one on each side to make accessible by the electrode holder for each set (leading/trailing) of electrodes. The graphite blocks (not shown) slide underneath the two smaller blocks mounted on each side of the main block (angled at 45 degrees). Three set screws are then used to hold each graphite block in place. A small rectangular block located underneath the angled block is used to raise the height location of the electrodes. A dowel pin running through the angled block serves as a stop for the graphite blocks to set a known location laterally. As noted, the tool ball used on this detail is used to establish a location in relation to the other two stations on the fixture.

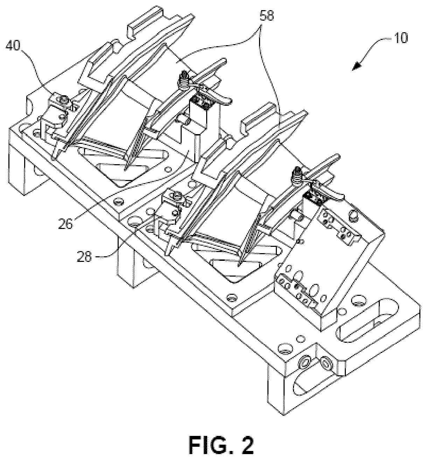

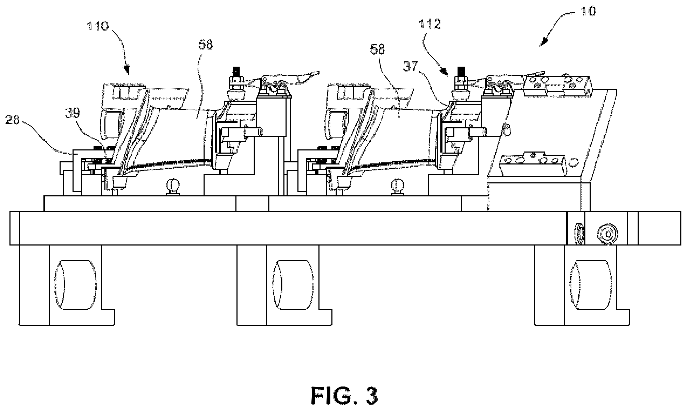

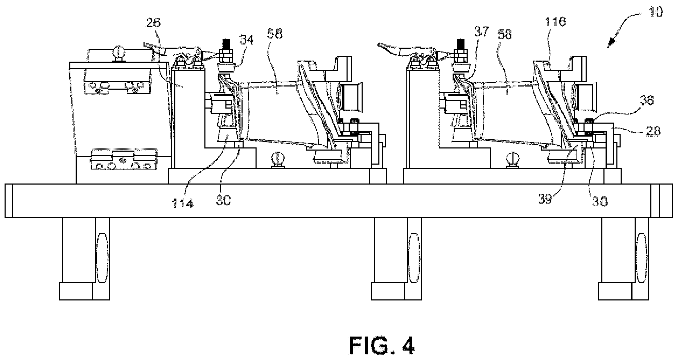

FIGS. 2-4 show various views of the EDM fixture 10 with the parts 58 secured in place for EDM processing. In the exemplary application shown, the parts 58 are turbine or compressor vanes. The airfoils and internal side walls adjacent the airfoils are referred to as the gas path of the vane. The front and back sides of the vane are referred to as end faces (leading and trailing). On the larger outer shroud 110, the vane has a slot used to set the orientation of the vane, which is referred as a clock/time slot. The smaller shroud is the inner shroud 112. The outer shroud 110 and the inner shroud 112 each include an overhang, known as the outer shroud flange 39 and an inner shroud flange 114. The edges of both the inner and outer shrouds 112, 110 are referred as the inner shroud rail 37 and the outer shroud rail 116, respectively. The EDM process may be used to repair and or re-shape seal slots in the leading edge and/or trailing edge of each vane. The EDM fixture 10 is configured to support the parts 58 in a horizontal orientation so that the electrode holder can access both the leading edge and the trailing edge without requiring the parts 58 to be repositioned.

With continued reference to FIGS. 2-4, the toggle clamp 26 may secure the inner shroud rail 37 of the vane between the engagement member 34 and the contact point 30. The secondary clamps 28 may engage the outer shroud flange 39 of the vane to sandwich the outer shroud flange 39 between the set screw 38 and the contact point 30.

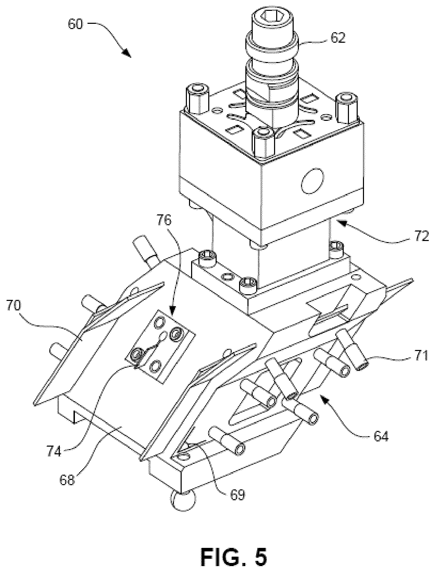

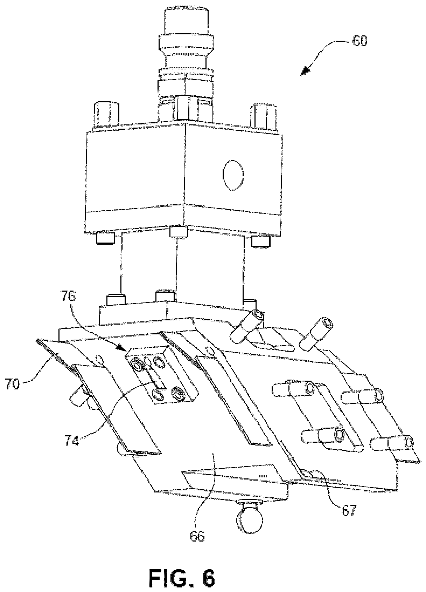

FIGS. 5 and 6 show an exemplary electrode holder 60 cooperable with the EDM fixture 10. The electrode holder 60 includes connecting structure 62 engageable with flushing lines (not shown). A main block 64 may include a leading face side 66 and a trailing face side 68. EDM electrodes 70 may be positioned for vane slot repair in the exemplary application. The EDM electrodes 70 could of course be secured in alternative locations for alternative applications. For example, the electrodes could be used to locate other surfaces of the part. Also, the operator can pick and choose to machine with one or more of the electrodes. Each slot (for example, four total) has its own assigned electrode. Thumbscrews 71 may secure the electrodes 70 in place.

An extension column 72 may be secured between the mounting structure 62 and the main block 64 to extend the distance between the connecting structure 62 and the main block 64.

In the exemplary application for seal slot repair, the leading face side 66 may be set at a first angle 67, and the trailing face side 68 may be set at a second angle 69, different from the first angle 67. The first and second angles 67, 69 may be supplementary angles. These angles may facilitate EDM processing on the leading edge and trailing edge of the vane to be repaired, respectively.

Each of the leading face side 66 and the trailing face side 68 may include a shim 74 secured in a guide block 76 fixed to each of the faces 66, 68. In use, in the exemplary application, the shim 74 may be used to probe the inner walls of the existing seal slots on the parts 58 to find the true center of the slots. In some embodiments, the shim can identify the true center within 1/1 000th of an inch.

A tool ball 78, which may be secured on an underside of the electrode holder 60, may be used to set/define points of reference for the holder 60. For example, the internal software may be aware of the tool ball 78 position relative to other parts of the electrode holder 60. When the software identifies a location of the tool ball 78, the software in turn may be aware of the locations of the other parts.

The internal software may be CNC (computer numerical control) software that may include program codes and instructions for controlling the physical movements of the electrode holder 60. The software may be programmed to initially determine whether the EDM fixture 10 is properly mounted on the work surface. A probe on the control arm (not shown) may be used to touch parts of the fixture to determine the location of the fixture on the work surface. The control arm for the holder may also use the tool ball 42 to measure the position of the EDM fixture 10. The system may be programmed to provide a signal or alarm if the fixture is out of place.

In some embodiments, the parts are currently processed on a CNC Sodick AD35L Sinker. The machine is programmed using GCode and MCode, where GCode is a computer language that is frequently used to program CNC machines. MCode is machine specific used to call out specific commands that the machine is capable of performing. For instance, MCode was used to use the capability of the machine to sense when the electrode makes contact with the part.

With the parts 58 secured on the EDM fixture 10 as shown in FIGS. 2-4, the internal software may determine whether the parts 58 are properly mounted on the EDM fixture 10. The control arm may touch the parts to locate part surfaces and may identify a slot depth for the electrodes. Subsequently, the system may use the shims 74 to identify the exact locations of the slots to be repaired or re-shaped. If the system is unable to locate the slots with the shims 74, the system may determine that the part is not mounted properly in the fixture and may send an alert. Once the positioning of the parts is verified and the location of the slots is identified, the internal software may automatically perform the EDM process via the electrodes 70 according to predefined parameters (e.g., shape, length, depth, etc.). The internal software may locate and process each workstation one part at a time.

The internal software may enable the customization of the EDM operation. For example, the internal software can be configured to process a single part, rather than two, or the internal software may be configured to process only one side of the part rather than both.

The EDM fixture and electrode holder according to the described embodiments provides advantages over existing EDM systems that rely on manual applications. The EDM fixture may be configured to support the parts in a horizontal orientation, allowing access to both end faces of the part. A probe or tool ball may be utilized to ensure proper setup and positioning of the EDM fixture and parts. In the exemplary application, the electrode holder may include a shim that uses existing seal slots to align the electrodes. The internal software may integrate alarms/notifications when the fixture or supported parts are misaligned. The EDM fixture and electrode holder automate the EDM process and thereby reduce human error.

While the invention has been described in connection with what is presently considered to be the most practical and preferred embodiments, it is to be understood that the invention is not to be limited to the disclosed embodiments, but on the contrary, is intended to cover various modifications and equivalent arrangements included within the spirit and scope of the appended claims.

## Claims

1. An electrical discharge machining (EDM) fixture for machining a part, the fixture comprising:
a support structure fixable onto a work surface;
a base plate fixed to the support structure;
a toggle clamp positioned on one side of the base plate;
a secondary clamp positioned on an opposite side of the base plate;
a plurality of contact points respectively associated with the toggle clamp and the secondary clamp; and
a tool ball fixed to the base plate,
wherein the part is securable on the base plate via the toggle clamp and the secondary clamp in engagement with the plurality of contact points.

2. A fixture according to claim 1, comprising two secondary clamps spaced from each other, and the fixture comprising three contact points respectively associated with the toggle clamp and the two secondary clamps.

3. A fixture according to claim 2, further comprising a clocking tab that is selectively engageable with the part to set an angle of rotation of the part.

4. A fixture according to claim 3, wherein the clocking tab is secured to the base plate between the two secondary clamps.

5. A fixture according to claim 1, further comprising a clocking tab that is selectively engageable with the part to set an angle of rotation of the part.

6. A fixture according to claim 1, wherein the support structure comprises a riser fixable onto the work surface and a subplate fixed to the riser, wherein the base plate is fixed to the subplate, the subplate including apertures for connectors that secure the subplate to the riser and for connectors that secure the base plate to the subplate.

7. A fixture according to claim 1, wherein the tool ball is positioned at a center of the base plate.

8. A fixture according to claim 1, wherein the base plate, the toggle clamp, the secondary clamp, and the tool ball define a workstation, and wherein the fixture comprises two workstations fixed to the support structure.

9. A fixture according to claim 1, wherein the base plate, the toggle clamp, and the secondary clamp are positioned to support the part in a horizontal orientation.

10. A fixture according to claim 1, further comprising a set block station secured on the support structure, the set block station configured for setting electrode offset/location for an EDM holder.

11. An electrical discharge machining (EDM) assembly for machining a part, the assembly comprising:
the EDM fixture of claim 1; and
an electrode holder cooperable with the EDM fixture, the electrode holder comprising:
a plurality of electrodes, and
a shim selectively engageable with the part to locate the electrode holder for use.

12. An assembly according to claim 11, wherein the electrode holder further comprises a leading face side and a trailing face side, and wherein the electrodes are secured to the leading face side and the trailing face side.

13. An assembly according to claim 12, wherein the electrode holder comprises a first shim on the leading face side and a second shim on the trailing face side.

14. An assembly according to claim 13, wherein the electrode holder includes a first guide block to which the first shim is secured and a second guide block to which the second shim is secured.

15. An assembly according to claim 12, wherein the leading face side is set at a first angle, and wherein the trailing face side is set at a second angle, different from the first angle, and wherein the first and second angles are supplementary angles.

16. An assembly according to claim 11, wherein the electrode holder comprises a tool ball on an underside thereof.

17. An assembly according to claim 11, wherein the base plate, the toggle clamp, and the secondary clamp are positioned to support the part in a horizontal orientation such that the electrode holder has access to opposite ends of the part.
